(19) **Europäisches Patentamt / European Patent Office / Office européen des brevets**

(11) **EP 1 938 503 B1**

(12) **FASCICULE DE BREVET EUROPEEN**

(45) Date de publication et mention
de la délivrance du brevet:
**30.05.2012 Bulletin 2012/22**

(21) Numéro de dépôt: **06820204.3**

(22) Date de dépôt: **12.10.2006**

(51) Int Cl.:
*H04L 9/08* (2006.01)     *H04L 9/30* (2006.01)

(86) Numéro de dépôt international:
**PCT/FR2006/002303**

(87) Numéro de publication internationale:
**WO 2007/045746 (26.04.2007 Gazette 2007/17)**

(54) **PROCEDE DE TRANSMISSION SECURISEE DE DONNEES**

VERFAHREN ZUR SICHEREN ÜBERTRAGUNG VON DATEN

METHOD FOR SECURE TRANSMISSION OF DATA

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.10.2005 FR 0510787**

(43) Date de publication de la demande:
**02.07.2008 Bulletin 2008/27**

(73) Titulaires:
• **CENTRE NATIONAL DE
LA RECHERCHE SCIENTIFIQUE (CNRS)
75794 Paris Cedex 16 (FR)**
• **UNIVERSITE MONTPELLIER II SCIENCES ET TECHNIQUES
DU LANGUEDOC
F-34095 Montpellier Cédex (FR)**

(72) Inventeurs:
• **PUECH, William
F-30000 Nimes (FR)**
• **RODRIGUES, José, Marconi
F-84000 Avignon (FR)**

(74) Mandataire: **Cabinet Plasseraud
52, rue de la Victoire
75440 Paris Cedex 09 (FR)**

(56) Documents cités:
**WO-A-2004/012378     FR-A- 2 868 226**

EP 1 938 503 B1

**Description**

L'invention concerne les procédés de transmission sécurisée de données et les dispositifs mettant en oeuvre ce type de procédé, notamment adaptés pour transmettre des fichiers de données fragmentables de taille importante.

Afin de transmettre des fichiers de taille importante, comme des images, de manière sécurisée, il est possible d'utiliser des systèmes de chiffrement symétriques. Cependant, ce type de chiffrement impose l'envoi d'une clef secrète utilisée pour décrypter et crypter le fichier transmis. En conséquence, un tel procédé de transmission de données sécurisées comprend le risque de l'interception de la clef qui peut permettre de décrypter le fichier de données. De plus, le récepteur connaîtra alors la clef utilisée par l'émetteur ce qui impose donc un changement régulier voire systématique de la clef secrète à utiliser.

Par ailleurs, il est très lourd d'utiliser un système de cryptage asymétrique mettant donc en oeuvre une clef privée pour crypter chaque fragment de fichier par l'émetteur et une clef publique transférée au récepteur pour décrypter ce fragment. En effet, du fait de la connaissance partielle de la clef par le récepteur, les systèmes asymétriques imposent l'utilisation de grands nombres entiers premiers, de taille importante, notamment supérieurs à 1024 bits (notamment en algorithme RSA) pour crypter chaque fragment de fichier. En conséquence, les ressources et le temps nécessaire pour mettre en oeuvre un tel procédé de transmission cryptée sont importants.

Un but de la présente invention est de pallier ces inconvénients.

La présente invention propose un procédé de transmission sécurisée de données permettant l'envoi de données de taille importante, notamment d'images, rapide et efficace.

Par ailleurs, le but de la présente invention est de fournir un procédé de transmission sécurisée de données robuste au bruit ou à la perte de données, notamment par une interception frauduleuse de paquets de données.

A cet effet, l'invention propose un procédé de transmission sécurisée d'un fichier fragmentable en une pluralité de fragments dans lequel,

(a) on fixe initialement une clé globale de chiffrement,
(b) on chiffre le fichier fragmentable en fonction de ladite clé globale pour former un premier fichier crypté ;
(c) on chiffre la clé globale au moyen d'un algorithme de chiffrement asymétrique pour obtenir une clé globale chiffrée,
(d) on insère des valeurs représentatives de la clé globale chiffrée parmi les fragments dudit fichier crypté pour former un deuxième fichier crypté, et ;
(e) on transmet ledit deuxième fichier crypté.

En insérant ainsi de manière cryptée la clef globale dans le fichier à transférer, le récepteur peut décrypter ainsi la clef globale avantageusement au moyen d'une clef publique d'un algorithme asymétrique. La clef globale étant de taille réduite, le décryptage de cette clef globale est facilement réalisable. Ensuite, le cryptage du fichier peut utiliser un algorithme de chiffrement moins lourd à mettre en oeuvre, et utilisant cette clef globale qui sera chiffrée puis insérée dans le fichier, ce qui assure un temps de cryptage/décryptage moins long.

On connaît du document WO04/012378, un enchaînement d'étapes sensiblement voisin. Toutefois, la présente invention va plus loin et propose une caractéristique particulièrement avantageuse selon laquelle, à l'étape (b), pour une succession de fragments :

(b1) on affecte à chaque fragment courant une clé dynamique de cryptage déterminée à partir d'une combinaison impliquant un groupe de fragments précédemment cryptés, et

(b2) on attribue à la valeur du fragment courant une valeur qui est fonction de sa valeur initiale et de ladite clé dynamique.

Ce type de chiffrement permet un cryptage rapide des données du fichier fragmentable et permet de résoudre l'ensemble des problèmes d'intégrité. En effet, si un paquet de données est perdu, l'ensemble du fichier crypté en sera modifié. Par ailleurs; ce type de cryptage permet de commencer le décryptage, à la réception, avant d'avoir reçu la totalité du fichier crypté. Ce type de cryptage est donc particulièrement adapté pour des transmissions de gros fichiers au travers d'un réseau tel que l'Internet.

Dans un mode de réalisation de l'invention, on insère, en plus des valeurs représentatives de la clef globale chiffrée dans le fichier crypté, une valeur représentative d'une signature du fichier fragmentable. Cette signature permet de vérifier, à la réception, que l'image transmise a été correctement décryptée, et notamment de vérifier l'intégrité de cette image. En effet, une interception de données lors de la transmission génèrerait un décalage tel que l'image une fois décryptée, ne correspondrait plus à la signature insérée dans l'image.

Dans une réalisation avantageuse aussi, on utilise une combinaison linéaire des valeurs des fragments précédemment cryptés, en mettant en oeuvre des coefficients $\alpha_j$, fonction de la clef globale, et dans lesquels les coefficients

$\alpha_j$ s'expriment par la relation :

$$\left\{ \begin{array}{ll} \alpha_j = \beta_j - 2^{l-1} - 1 \ si \ \beta_j \in \left\{ 0,...,2^l - 2 \right\}, \\ a_j = \pm 2^{l-1} \qquad si \ \beta_j = 2^l - 1, \end{array} \right.$$

avec

$$\beta_j = \sum_{n=1}^{l} 2^{l-n} b_{lj-l+n,}$$

où $b_{lj-l+n}$ sont l valeurs successives de la clé globale.

Cette relation permet de choisir les $\alpha_j$ de sorte que la somme de ces coefficients est très proche de zéro. Ainsi, comme l'insertion de données est effectuée dans le fichier, du bruit (aléas) est également inséré. Le fait de choisir les $\alpha_j$ de sorte que leur somme est environ égale à zéro permet d'atténuer le bruit durant la phase de décryptage. Les $\alpha_j$ sont donc choisis de sorte que la densité de probabilité d'apparition de chaque valeur est à peu près uniforme.

Ensuite, l'invention propose un procédé de réception sécurisée d'un fichier fragmentable crypté en une pluralité de fragments, dans lequel :

a') on reçoit le fichier crypté,

b') on extrait des valeurs représentatives d'une clef globale chiffrée parmi les fragments dudit fichier crypté,

c') on déchiffre la clef globale chiffrée en utilisant une clef publique pour obtenir une clef globale déchiffrée,

d') on déchiffre le fichier fragmentable crypté en fonction de ladite clef globale déchiffrée.

Selon une caractéristique générale avantageuse de l'invention, à la réception, et plus particulièrement à l'étape b'), on détermine une clé dynamique de cryptage propre à chaque fragment courant, à partir d'une combinaison impliquant un groupe de fragments précédemment décryptés.

Par ailleurs, l'invention propose un système d'émission/réception mettant en oeuvre un procédé de transmission sécurisée d'un fichier fragmentable conforme à l'invention.

De plus, l'invention propose également un produit programme d'ordinateur dont l'installation sur un ordinateur permet l'exécution du procédé de transmission sécurisée conforme à l'invention et/ou le procédé de réception conforme à l'invention.

D'autres particularités et avantages de la présente invention apparaîtront dans la description ci-après d'un exemple de réalisation non limitatif, en référence aux dessins annexés, sur lesquels :

- la figure 1 représente un réseau dans lequel le procédé de l'invention est mis en oeuvre ;
- la figure 2 est un organigramme représentant un procédé de transmission sécurisée conforme à l'invention ;
- la figure 3 est un organigramme représentant un procédé de réception conforme à l'invention.

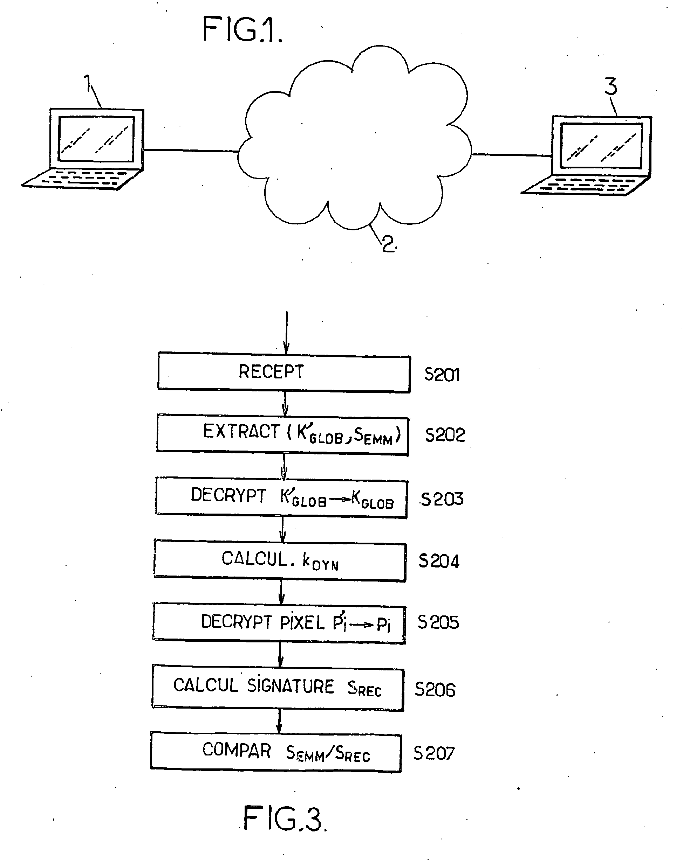

La figure 1 représente un premier terminal 1 relié à un réseau informatique 2, par exemple Internet. Le premier terminal 1 est adapté pour transmettre via le réseau 2 des données à un deuxième terminal 3.

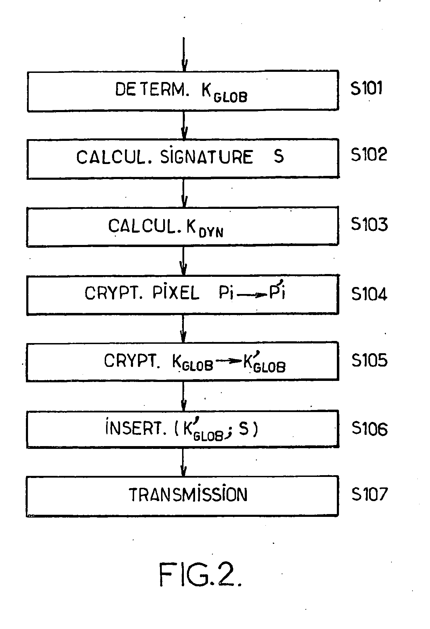

Afin de transmettre de manière sécurisée un fichier de données de taille importante, comme par exemple une image, au travers du réseau informatique 2, l'invention propose un procédé illustré notamment par l'exemple de la figure 2. A l'étape S101, et selon le procédé conforme à l'invention, on détermine une clef globale de cryptage $K_{glob}$. Cette clef est formée par exemple de kbits divisés en T mots

où $T = \dfrac{k}{l}$ , l étant la longueur de chacun des mots.

Cette clef globale peut être utilisée afin d'effectuer un cryptage par flot, comme décrit ci-après. Cependant, cette clef globale peut être une clef secrète pour un algorithme de cryptage symétrique par bloc, ou tout autre type d'algorithme de cryptage.

Cette clef peut être mémorisée dans le système de cryptage qui va effectuer le cryptage et la transmission du fichier crypté, ou peut également être générée par un générateur de clefs de cryptage.

A l'étape S102, on peut calculer une signature S de l'image qui peut être également transmise avec le fichier crypté. Cette signature permet notamment de vérifier l'intégrité du fichier lors de la réception afin de contrôler qu'aucune interception ou perte de paquet n'a été occasionnée par la transmission. En conséquence, cette signature S permet de renforcer la sécurité de l'image. En effet, dans le cadre d'application au transfert d'images médicales par exemple entre un laboratoire d'imagerie médicale et le médecin qui doit analyser les images obtenues, il est important de s'assurer qu'aucune donnée n'a été ajoutée ou modifiée dans l'image transférée. La signature permet d'effectuer une comparaison entre l'image reçue et l'image transmise.

Ensuite, le procédé peut mettre en oeuvre un algorithme de cryptage par flot qui est notamment adapté à la transmission de fichier au travers d'un réseau comme dans l'exemple représenté. En effet, ce type de cryptage permet notamment de commencer le déchiffrement des données cryptées avant même que le fichier ne soit entièrement reçu. Cependant, un autre procédé de cryptage pourrait être utilisé, par exemple un cryptage par bloc à clef secrète, où la clef secrète serait la clef globale $K_{glob}$. Néanmoins, l'algorithme de chiffrement par flot présente divers avantages par rapport à l'algorithme par bloc. Tout d'abord, contrairement à l'algorithme par bloc, l'algorithme par flot est moins sensible au bruit. Ensuite, l'intégrité des images est améliorée. En outre, l'algorithme par flot ne fait pas apparaître de zones texturées lorsque l'image non cryptée présente des zones homogènes. Conformément à l'étape S103, pour chaque fragment du fichier à crypter, par exemple pour chaque pixel ou groupe de pixels, $p_i$ de l'image, une clef dynamique $k_{dyn}$ est calculée, dans le cadre de l'algorithme de chiffrement par flot. Ce chiffrement par flot peut être dit synchrone ou asynchrone. Dans le cas d'un chiffrement par flot synchrone, la clef dynamique $k_{dyn}$ ne dépend pas des données à crypter ou cryptées. A l'inverse, dans le cas d'un chiffrement asynchrone, la clef dynamique qui est établie en fonction des pixels précédemment cryptés. Cette clef dynamique peut par exemple être obtenue au moyen de diverses fonctions de génération de clef et, comme dans le mode de réalisation préféré de l'invention, au moyen d'une combinaison linéaire, comme indiqué par la formule suivante :

$$\begin{cases} z_i = \left( \sum_{j=1}^{n} \alpha_j p'_{i-j} \right) \bmod X \\ p'_i = \left( z_i + p_i \right) \bmod X \end{cases}$$

où :

- $z_i$ est la valeur de clé dynamique affectée au pixel ou fragment courant de valeur $p_i$, i variant entre 1 et n, où n est le nombre de pixels ou fragments,
- $\alpha_j$ avec j compris entre 1 et n est un jeu de coefficients pour la mise en oeuvre de la combinaison linéaire appliquée au pixel ou fragment courant,
- $p'_{i-j}$ avec i-j compris entre i-n et i-1 est un jeu de valeurs de n pixels précédemment cryptés,
- $p'_i$ est la valeur du pixel courant crypté, et
- mod X correspond à une congruence propre à un échantillonnage desdits fragments.

Dans cet exemple, X dépend de la taille de la mémoire allouée au calcul des valeurs cryptées du pixel courant. En général, X vaut 256 points. Chaque pixel $p_i$ est donc crypté en pixel $p_i'$ à l'étape S104. Par ailleurs les coefficients $\alpha_j$ de la combinaison linéaire sont obtenus à partir de la clef globale $K_{glob}$. Un exemple de réalisation est illustré par la formule suivante :

$$\begin{cases} \alpha_j = \beta_j - 2^{l-1} - 1 \ si \ \beta_j \in \left\{ 0,...,2^l - 2 \right\}, \\ a_j = \pm 2^{l-1} \qquad si \ \beta_j = 2^l - 1, \end{cases}$$

avec

$$\beta_j = \sum_{n=1}^{l} 2^{l-n} b_{lj-l+n,}$$

où $b_{lj-l+n}$ sont l valeurs successives de la clé globale.

Dans ce cas, la clef globale $K_{glob}$ est formée de n mots d'une longueur de l bits, chaque bit étant noté $b_j$. En utilisant une telle formule, on peut jouer sur les coefficients $\alpha_j$, notamment de sorte que la somme de l'ensemble des $\alpha_j$ soit environ nulle. Ceci permet notamment de diminuer l'influence du bruit de l'algorithme de décryptage conforme à l'invention.

Lorsque l'ensemble du fichier a été crypté, la clef globale $K_{glob}$ est à son tour cryptée, par exemple par un algorithme de chiffrement asymétrique avec une clef publique et une clef privée. On peut utiliser pour ce cas un tel algorithme de chiffrement, car la clef globale n'est pas un fichier de taille trop importante.

Une fois chiffrée à l'étape S105, la clef globale chiffrée $K'_{glob}$ est ensuite insérée dans le fichier crypté (S106). La signature peut également être cryptée au cours de cette même étape. L'insertion des données peut se faire de différentes manières en fonction de la longueur du message à insérer et de la robustesse désirée. Pour l'insertion de données fichées dans des images, il existe deux grands groupes de méthodes : les méthodes qui travaillent dans le domaine spatial, et les méthodes qui travaillent dans le domaine fréquentiel, notamment avec la DCT (Discrete Cosinus Transform). La combinaison dans le domaine spatial et fréquentiel est également possible. On peut utiliser une combinaison qui embarque directement les données dans les pixels de l'image. Notamment en utilisant par exemple des générateurs de nombres pseudo aléatoires pour choisir la séquence de pixels affectée par l'insertion. Cependant, la méthode préférée dans l'invention utilise un algorithme qui embarque l'information dans les bits de poids faible de l'image. L'objectif est d'embarquer dans l'image un message de n bits composé de la clef secrète cryptée et de la signature de l'image originale. Il faut alors calculer un facteur d'insertion afin de disperser le message dans toute l'image. Cette dispersion permet d'atténuer le bruit dû à l'insertion de donnée et permet également d'étendre l'intégrité visuelle de l'image à toute l'image. L'image est donc divisée en n régions de taille équivalente, chacune de ces régions sera utilisée pour embarquer un bit du message. La récurrence de l'algorithme de l'insertion devra être égale au moins à la taille de ces régions en insertion de données cachées.

Une fois l'ensemble des données insérées dans le fichier, le fichier ainsi crypté est transmis à l'étape S107 vers un destinataire, par exemple le second terminal 3 de la figure 1.

Ensuite, le destinataire peut décrypter l'image en utilisant un procédé de déchiffrement inverse illustré par la figure 3, c'est-à-dire en commençant par extraire de l'image reçue à l'étape S201, la clef globale cryptée ainsi que la signature $S_{EMM}$(S202). Puis, l'utilisateur peut décrypter cette clef globale au moyen d'une clef publique qui, par exemple, lui a été transmise par l'expéditeur préalablement (S203), et décrypter au moyen de cette clef globale décryptée l'ensemble de l'image de manière analogue à l'algorithme de cryptage utilisé, aux étapes S204 et S205. Enfin, on calcule la signature $S_{REC}$ de l'image reçue décryptée à l'étape S206, puis on compare, à l'étape S207, la signature de l'image originale $S_{EMM}$ à la signature de l'image reçue $S_{REC}$, afin de vérifier l'intégrité de l'image, et de déterminer si les données transmises ont subi une attaque lors de la transmission.

Bien entendu, l'invention ne se limite pas à la forme de réalisation décrite ci-avant à titre d'exemple ; elle s'applique à d'autres variantes.

Ainsi, selon une réalisation avantageuse, on peut en outre compresser le fichier de données au cours du cryptage.

**Revendications**

1. Procédé de transmission sécurisée d'un fichier fragmentable en une pluralité de fragments dans lequel,

   (a) on fixe (S101) initialement une clé globale de chiffrement,
   (b) on chiffre (S104) le fichier fragmentable en fonction de ladite clé globale pour former un premier fichier crypté ;
   (c) on chiffre (S105) la clé globale au moyen d'un algorithme de chiffrement asymétrique pour obtenir une clé globale chiffrée,
   (d) on insère (S106) des valeurs représentatives de la clé globale chiffrée parmi les fragments dudit fichier crypté pour former un deuxième fichier crypté, et ;
   (e) on transmet (S107) ledit deuxième fichier crypté,

   **caractérisé en ce que** l'étape (b) consiste en les étapes suivantes: une succession de fragments du fichier fragmentable, pour

(b1) on affecte à chaque fragment courant une clé dynamique de cryptage déterminée à partir d'une combinaison impliquant un groupe de fragments précédemment cryptés, et
(b2) on attribue à la valeur du fragment courant une valeur qui est fonction de sa valeur initiale et de ladite clé dynamique.

**2.** Procédé selon la revendication 1, suivant lequel à l'étape (d), on insère de plus une valeur représentative d'une signature du fichier fragmentable.

**3.** Procédé selon l'une des revendications 1 et 2, **caractérisé en ce que**, à l'étape (b1), on applique une combinaison linéaire aux valeurs des fragments précédemment cryptés.

**4.** Procédé selon la revendication 3, **caractérisé en ce que** la combinaison linéaire s'exprime par :

$$\begin{cases} z_i = \left( \sum_{j=1}^{n} \alpha_j p'_{i-j} \right) \mathrm{mod}\, X \\ p'_i = (z_i + p_i) \mathrm{mod}\, X \end{cases}$$

où:

- $z_i$ est la valeur de clé dynamique affectée au fragment courant de valeur $p_i$,
- $\alpha_j$ avec j compris entre 1 et n est un jeu de coefficients pour la mise en oeuvre de la combinaison linéaire appliquée au fragment courant,
- $p'_{i-j}$ avec i-j compris entre i-n et i-1 est un jeu de valeurs de n fragments précédemment cryptés,
- $p'_j$ est la valeur du fragment courant crypté, et
- mod X correspond à une congruence propre à un échantillonnage desdits fragments.

**5.** Procédé selon la revendication 4, **caractérisé en ce que** ladite combinaison linéaire fait intervenir des coefficients ($\alpha_j$) qui s'expriment en fonction de la clé globale.

**6.** Procédé selon l'une des revendications 3 à 5, **caractérisé en ce que** ladite combinaison linéaire fait intervenir des coefficients dont la somme est minimale en valeur absolue.

**7.** Procédé selon l'une des revendications 3 à 6, **caractérisé en ce que** la clé globale comporte une succession d'un premier nombre de valeurs,
et **en ce que** la combinaison linéaire fait intervenir un second nombre de fragments précédemment cryptés, le premier nombre étant un multiple du second nombre.

**8.** Procédé selon la revendication 7, prise en combinaison avec la revendication 6, **caractérisé en ce que** les coefficients $\alpha_j$ s'expriment par la relation :

$$\begin{cases} \alpha_j = \beta_j - 2^{l-1} - 1 \ si \ \beta_j \in \{0,...,2^l - 2\}, \\ a_j = \pm 2^{l-1} \qquad si \ \beta_j = 2^l - 1, \end{cases}$$

avec

$$\beta_j = \sum_{n=1}^{l} 2^{l-n} b_{lj-l+n.}$$

où $b_{lj-l+n}$ sont l valeurs successives de la clé globale.

**9.** Procédé selon la revendication 7 ou la revendication 8, **caractérisé en ce que** le premier nombre est le double du second nombre (n = k/2).

**10.** Procédé selon l'une des revendications précédentes, **caractérisé en ce que** lesdites valeurs successives de la clé globale sont insérées dans des blocs respectifs de fragments cryptés, de mêmes dimensions.

**11.** Procédé selon l'une des revendications précédentes, **caractérisé en ce que** ledit fichier est constitué d'échantillons et **en ce que** chaque fragment est un échantillon ou un bloc d'échantillons.

**12.** Procédé selon la revendication 11, **caractérisé en ce que** les échantillons sont des pixels ou des voxels ou des pixels temporels.

**13.** Procédé de réception sécurisée d'un fichier fragmentable crypté en une pluralité de fragments selon le procédé de la revendication 1 , dans lequel :

a') on reçoit (S201) le fichier crypté,

b') on extrait (S202) des valeurs représentatives d'une clef globale chiffrée parmi les fragments dudit fichier crypté,

c') on déchiffre (S203) la clef globale chiffrée en utilisant une clef publique pour obtenir une clef globale déchiffrée,

d') on déchiffre (S205) le fichier fragmentable crypté en fonction de ladite clef globale déchiffrée,

**caractérisé en ce que** l'étape d') consiste en les étapes suivantes: pour une succession de fragments du fichier fragmentable, on détermine une clé dynamique de cryptage, propre à chaque fragment courant, à partir d'une combinaison impliquant un groupe de fragments précédemment décryptés, et on attribue à la valeur du fragment courant une valeur qui est fonction de sa valeur initiale et de ladite clé dynamique.

**14.** Procédé selon la revendication 13, suivant lequel on vérifie le fichier décrypté au moyen d'une signature insérée avec la clef globale chiffrée parmi les fragments dudit fichier crypté.

**15.** Système d'émission/réception adapté pour mettre en oeuvre un procédé selon l'invention selon l'une des revendications 1 à 12, et/ou 13 et 14.

**16.** Produit programme d'ordinateur, dont l'installation sur un ordinateur permet l'exécution du procédé de transmission selon l'une des revendications 1 à 12 et/ou du procédé de réception selon l'une des revendications 13 et 14.

**Claims**

**1.** A method for secure transmission of a file fragmentable into a plurality of fragments in which,

(a) a global encipherment key is fixed initially (S101),

(b) the fragmentable file is enciphered as a function of said global key to form a first encrypted file (S 104);

(c) the global key is enciphered by means of an asymmetric encipherment algorithm to obtain an enciphered global key (S105),

(d) values representative of the enciphered global key are inserted among the fragments of said encrypted file to form a second encrypted file (S 106), and;

(e) said second encrypted file is transmitted (S107),

**characterized in that** the step (b) consists in the following steps, for a succession of fragments of the fragmentable file:

(b1) each current fragment is assigned a dynamic encryption key determined on the basis of a combination involving a group of previously encrypted fragments, and

(b2) the value of the current fragment is allocated a value which is dependent on its initial value and on said dynamic key.

**2.** The method as claimed in claim 1, according to which in step (d), a value representative of a signature of the fragmentable file is moreover inserted.

3. The method as claimed in one of claims 1 and 2, **characterized in that**, in step (b1), a linear combination is applied to the values of the previously encrypted fragments.

4. The method as claimed in claim 3, **characterized in that** the linear combination is expressed by:

$$\begin{cases} z_i = \left( \sum_{j=1}^{n} \alpha_j p'_{i-j} \right) \bmod X \\ p'_i = (z_i + p_i) \bmod X \end{cases}$$

where:

- $z_i$ is the dynamic key value assigned to the current fragment of value $p_i$,
- $\alpha_j$ with j lying between 1 and n is a set of coefficients for implementing the linear combination applied to the current fragment,
- $p'_{i-j}$ with i-j lying between i-n and i-1 is a set of values of n previously encrypted fragments,
- $p'_j$ is the value of the encrypted current fragment, and
- mod X corresponds to a congruence specific to a sampling of said fragments.

5. The method as claimed in claim 4, **characterized in that** said linear combination involves coefficients ($\alpha_j$) which are expressed as a function of the global key.

6. The method as claimed in one of claims 3 to 5, **characterized in that** said linear combination involves coefficients whose sum is minimal in absolute value.

7. The method as claimed in one of claims 3 to 6, **characterized in that** the global key comprises a succession of a first number of values,
and **in that** the linear combination involves a second number of previously encrypted fragments, the first number being a multiple of the second number.

8. The method as claimed in claim 7, taken in combination with claim 6, **characterized in that** the coefficients $\alpha_j$ are expressed by the relation:

$$\begin{cases} \alpha_j = \beta_j - 2^{l-1} - 1 \ if \ \beta_j \in \{0,...,2^l - 2 \}, \\ a_j = \pm 2^{l-1} \qquad if \ \beta_j = 2^l - 1, \end{cases}$$

with

$$\beta_j = \sum_{n=1}^{l} 2^{l-n} b_{lj-l+n,}$$

where $b_{lj-l+n}$ are 1 successive values of the global key.

9. The method as claimed in claim 7 or claim 8, **characterized in that** the first number is twice the second number ($n = k/2$).

10. The method as claimed in one of the preceding claims, **characterized in that** said successive values of the global key are inserted into respective blocks of encrypted fragments, of the same dimensions.

11. The method as claimed in one of the preceding claims, **characterized in that** said file consists of samples and **in that** each fragment is a sample or a block of samples.

12. The method as claimed in claim 11, **characterized in that** the samples are pixels or voxels or temporal pixels.

13. A method for secure reception of an encrypted file fragmentable into a plurality of fragments according to the method as claimed in claim 1, in which:

> a') the encrypted file is received (S201),
> b') values representative of an enciphered global key are extracted from among the fragments of said encrypted file (S202),
> c') the enciphered global key is deciphered using a public key to obtain a deciphered global key (S203),
> d') the encrypted fragmentable file is deciphered as a function of said deciphered global key (S205),
>
> **characterized in that** the step b') consists in the following steps for a succession of fragments of the fragmentable file, determining a dynamic encryption key specific to each current fragment on the basis of a combination involving a group of previously decrypted fragments, and
> allocating to the value of the current fragment a value which is dependent on its initial value and on said dynamic key.

14. The method as claimed in claim 13, according to which the decrypted file is verified by means of a signature inserted with the enciphered global key among the fragments of the encrypted file.

15. A send/receive system adapted for implementing a method according to the invention as claimed in one of claims 1 to 12, and/or 13 and 14.

16. A computer program product, whose installation on a computer allows the execution of the transmission method as claimed in one of claims 1 to 12 and/or of the method of reception as claimed in one of claims 13 and 14.

**Patentansprüche**

1. Verfahren zur gesicherten Übertragung einer Datei, die in eine Mehrzahl von Fragmenten fragmentierbar ist, wobei

> (a) zunächst ein globaler Chiffrierungsschlüssel festgelegt (S101) wird,
> (b) die fragmentierbare Datei gemäß diesem globalen Schlüssel verschlüsselt (S 104) wird, um eine erste kodierte Datei zu bilden,
> (c) der globale Schlüssel mittels eines asymmetrischen Chiffrierungsalgorithmus verschlüsselt (S105) wird, um einen verschlüsselten globalen Schlüssel zu erhalten,
> (d) repräsentative Werte des verschlüsselten globalen Schlüssels zwischen den Fragmenten der kodierten Datei eingefügt (S106) werden, um eine zweite kodierte Datei zu bilden, und
> (e) die zweite kodierte Datei übertragen (S107) wird,
>
> **dadurch gekennzeichnet, dass** Schritt (b) folgende Schritte umfasst: für eine Folge von Fragmenten der fragmentierbaren Datei
>
> (b1) wird jedem aktuellen Fragment ein dynamischer Kodierungsschlüssel zugeordnet, der basierend auf einer Kombination bestimmt wird, die eine Gruppe von zuvor kodierten Fragmenten einschließt, und
> (b2) wird dem Wert des aktuellen Fragments ein Wert zugeordnet, der abhängig von seinem Anfangswert und dem dynamischen Schlüssel ist.

2. Verfahren nach Anspruch 1, wobei in Schritt (d) zusätzlich ein für eine Signatur der fragmentierbaren Datei repräsentativer Wert eingeführt wird.

3. Verfahren nach einem der Ansprüche 1 und 2, **dadurch gekennzeichnet, dass** in Schritt (b1) eine lineare Kombination auf die Werte der zuvor kodierten Fragmente angewendet wird.

**4.** Verfahren nach Anspruch 3, **dadurch gekennzeichnet, dass** die lineare Kombination wie folgt lautet:

$$z_i = \left[ \sum_{j=i}^{n} \alpha_j p'_{i-j} \right] \bmod X$$

$$p'_i = (z_i + p_i) \bmod X$$

Dabei gilt:

- $z_i$ ist der Wert des dynamischen Schlüssels, der dem aktuellen Fragment mit dem Wert $p_i$ zugeordnet wird,
$\alpha_j$, mit j zwischen 1 und n, ist ein Satz von Koeffizienten für die Implementierung der auf das aktuelle Fragment angewendeten linearen Kombination,
- $p'_{i-j}$, mit i-j zwischen i-n und i-1, ist eine Gruppe von Werten von n zuvor kodierten Fragmenten,
- $p'_j$ ist der Wert des aktuellen kodierten Fragments, und
- mod X entspricht einer geeigneten Kongruenz für eine Probenerhebung der Fragmente.

**5.** Verfahren nach Anspruch 4, **dadurch gekennzeichnet, dass** die lineare Kombination Koeffizienten ($\alpha_j$) einsetzt, die abhängig vom globalen Schlüssel Ausdruck finden.

**6.** Verfahren nach einem der Ansprüche 3 bis 5, **dadurch gekennzeichnet, dass** die lineare Kombination Koeffizienten einsetzt, deren Summe als absoluter Wert minimal ist.

**7.** Verfahren nach einem der Ansprüche 3 bis 6, **dadurch gekennzeichnet, dass** der globale Schlüssel eine Folge einer ersten Anzahl von Werten umfasst,
und dadurch, dass die lineare Kombination eine zweite Anzahl von zuvor kodierten Fragmenten einsetzt, wobei die erste Anzahl ein Vielfaches der zweiten Anzahl ist.

**8.** Verfahren nach Anspruch 7, in Kombination mit Anspruch 6, **dadurch gekennzeichnet, dass** die Koeffizienten $\alpha_j$ durch folgendes Verhältnis Ausdruck finden:

$$\alpha_j = \beta_j - 2^{l-1} - 1, \; wenn \; \beta_j \in \{ 0, \ldots, 2^l - 2 \},$$

$$a_j = \pm 2^{l-1} \qquad wenn \; \beta_j = 2^l - 1,$$

mit

$$\beta_j = \sum_{n=1}^{l} 2^{l-n} b_{lj-l+n}$$

wobei $\ddot{O}_{lj-l+n}$ l aufeinander folgende Werte des globalen Schlüssels sind.

9. Verfahren nach Anspruch 7 oder Anspruch 8, **dadurch gekennzeichnet, dass** die erste Anzahl das Doppelte der zweiten Anzahl ist (n = k/2).

10. Verfahren nach einem der vorangehenden Ansprüche, **dadurch gekennzeichnet, dass** die aufeinander folgenden Werte des globalen Schlüssels in jeweilige Blöcke kodierter Fragmente gleicher Dimensionen eingefügt werden.

11. Verfahren nach einem der vorangehenden Ansprüche, **dadurch gekennzeichnet, dass** die Datei aus Proben besteht und dass jedes Fragment eine Probe oder ein Probenblock ist.

12. Verfahren nach Anspruch 11, **dadurch gekennzeichnet, dass** die Proben Pixel oder Voxel oder temporäre Pixel sind.

13. Verfahren für den gesicherten Empfang einer kodierten Datei, die nach dem Verfahren in Anspruch 1 in eine Mehrzahl von Fragmenten fragmentierbar ist, wobei:

   a') die kodierte Datei empfangen (S201) wird,
   b') repräsentative Werte eines verschlüsselten globalen Schlüssels zwischen den Fragmenten der kodierten Datei extrahiert (S202) werden,
   c') der kodierte globale Schlüssel mittels eines öffentlichen Schlüssels entschlüsselt (S203) wird, um einen entschlüsselten globalen Schlüssel zu erhalten,
   d') die kodierte fragmentierbare Datei gemäß dem entschlüsselten globalen Schlüssel entschlüsselt (S205) wird,

   **dadurch gekennzeichnet, dass** der Schritt d folgende Schritte umfasst: für eine Folge von Fragmenten der fragmentierbaren Datei wird auf der Grundlage einer Kombination, die eine Gruppe von zuvor kodierten Fragmenten einschließt, ein für jedes aktuelle Fragment eigener dynamischer Kodierungsschlüssel festgelegt, und dem Wert des aktuellen Fragments wird ein Wert zugeordnet, der eine Funktion des Anfangswertes und des dynamischen Schlüssels ist.

14. Verfahren nach Anspruch 13, wobei die dekodierte Datei mittels einer mit dem kodierten globalen Schlüssel zwischen den Fragmenten der kodierten Datei eingefügten Signatur überprüft wird.

15. Ausgabe-/Empfangssystem, welches dazu ausgebildet ist, ein erfindungsgemäßes Verfahren nach einem der Ansprüche 1 bis 12 und/oder 13 und 14 auszuführen.

16. Computerprogrammprodukt, dessen Installation auf einem Computer die Ausführung des Übertragungsverfahrens nach einem der Ansprüche 1 bis 12 und/oder des Empfangsverfahrens nach einem der Ansprüche 13 und 14 ermöglicht.

# FIG.1.

# FIG.3.

| | |
|---|---|
| RECEPT | S201 |
| EXTRACT ( $K'_{GLOB}, S_{EMM}$ ) | S202 |
| DECRYPT $K'_{GLOB} \rightarrow K_{GLOB}$ | S203 |
| CALCUL. $k_{DYN}$ | S204 |
| DECRYPT PIXEL $P'_i \rightarrow P_i$ | S205 |
| CALCUL SIGNATURE $S_{REC}$ | S206 |
| COMPAR $S_{EMM}/S_{REC}$ | S207 |

| DETERM. $K_{GLOB}$ | S101 |
| CALCUL. SIGNATURE S | S102 |
| CALCUL. $K_{DYN}$ | S103 |
| CRYPT. PIXEL $Pi \longrightarrow P'i$ | S104 |
| CRYPT. $K_{GLOB} \longrightarrow K'_{GLOB}$ | S105 |
| INSERT. $(K'_{GLOB}; S)$ | S106 |
| TRANSMISSION | S107 |

FIG.2.

**EP 1 938 503 B1**

## RÉFÉRENCES CITÉES DANS LA DESCRIPTION

**Documents brevets cités dans la description**

- WO 04012378 A